# EUROPEAN PATENT APPLICATION

(11) **EP 4 755 685 A1**
(43) Date of publication of application: **10.06.2026**
(21) Application number: 24217836.6
(22) Date of filing: 05.12.2024
(51) Int. Cl.: B60K 15/03

(54) **SIDE IMPACT STRUCTURE FOR A FUEL TANK OF A VEHICLE**

(71) Applicant: Volvo Truck Corporation, 405 08 Göteborg (SE)
(72) Inventor: MITTAL, Tanmay, 560066 Bangalore (IN)
(74) Representative: Ström & Gulliksson AB

(57) **Abstract**

A side impact structure for a fuel tank of a vehicle includes a base structure attached to a side-facing portion of the fuel tank, and at least one spheroidal element rotatably coupled to the base structure, wherein impact energy by an object with the at least one spheroidal element in a first direction causes the at least one spheroidal element to rotate to convert the impact energy into rotational energy to direct the impact energy toward a second direction normal to the first direction.

## Description

### TECHNICAL FIELD

The disclosure relates generally to a side impact structure. In particular aspects, the disclosure relates to a side impact structure for a fuel tank of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In many vehicles, such as heavy trucks for example, many manufacturers may position fuel tanks, e.g., for storing Liquid Natural Gas (LNG), hydrogen, or another fuel, behind the cab of the truck, which may allow for longer ranges for the vehicle. These tanks may also typically include electrical equipment, valves, venting pipes, etc. at one end, which may be vulnerable to damage and failure in the event of a side impact or rollover impact.

In these types of accidents, the fuel tank may come in direct contact with an external object and/or the ground, which exposes electrical equipment, valves, vent assembly and tank itself to the impact, which in turn creates a risk of fuel leakage, fire, and damage to the fuel tank and attached components. There is a need for a technical solution to address this and other technical problems with conventional fuel tank arrangements.

### SUMMARY

According to a first aspect of the disclosure, a side impact structure for a fuel tank of a vehicle includes a base structure attached to a side-facing portion of the fuel tank. The side impact structure further includes at least one spheroidal element rotatably coupled to the base structure, wherein impact energy by an object with the at least one spheroidal element in a first direction causes the at least one spheroidal element to rotate to convert the impact energy into rotational energy to direct the impact energy toward a second direction normal to the first direction. The first aspect of the disclosure may seek to protect the fuel tank against side impact and rollover impact damage. A technical benefit may include redirecting impact damage away from the fuel tank to reduce the risk of damage to the fuel tank.

Optionally in some examples, including in at least one preferred example, the first direction is a lateral direction with respect to a direction of travel of the vehicle, and the second direction is a longitudinal and/or vertical direction with respect to the direction of travel of the vehicle.

Optionally in some examples, including in at least one preferred example the at least one spheroidal element is arranged to impact a ground surface before the fuel tank during a rollover of the vehicle.

Optionally in some examples, including in at least one preferred example at least one spheroidal element comprises a plurality of spheroidal elements.

Optionally in some examples, including in at least one preferred example the base structure comprises at least one recess to retain the at least one spheroidal element therein.

Optionally in some examples, including in at least one preferred example the at least one recess permits rotation of at least one spheroidal element in all rotational directions.

Optionally in some examples, including in at least one preferred example, the side-impact structure further comprises a wall structure coupled to the base structure for connection to the fuel tank, wherein the impact energy causes structural failure of the wall structure before structural failure of the base structure.

Optionally in some examples, including in at least one preferred example, a fuel tank assembly for a vehicle includes a fuel tank and the side impact structure coupled to the fuel tank.

Optionally in some examples, including in at least one preferred example the side-impact structure is bolted to the fuel tank.

Optionally in some examples, including in at least one preferred example the side-impact structure is welded to the fuel tank.

Optionally in some examples, including in at least one preferred example, the side impact structure includes at least one of an electrical equipment, a valve, and a vent element disposed between the base structure and the fuel tank.

Optionally in some examples, including in at least one preferred example, the side-impact structure is arranged to face in a lateral direction with respect to a direction of travel of the vehicle.

According to a second aspect of the disclosure a method includes rotatably coupling at least one spheroidal element to a base structure of a side-impact structure. The method further includes coupling the base structure to a fuel tank of a vehicle wherein impact energy by an object with one of at least one spheroidal element in a first direction causes the at least one spheroidal element to rotate to convert the impact energy into rotational energy to direct the impact energy toward a second direction normal to the first direction. The second aspect of the disclosure may seek to protect the fuel tank against side impact and rollover impact damage. A technical benefit may include redirecting impact damage away from the fuel tank to reduce the risk of damage to the fuel tank.

Optionally in some examples, including in at least one preferred example, the first direction is a lateral direction with respect to a direction of travel of the vehicle, and the second direction is a longitudinal and/or vertical direction with respect to the direction of travel of the vehicle.

Optionally in some examples, including in at least one preferred example, the at least one spheroidal element is arranged to impact a ground surface before the fuel tank during a rollover of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 illustrates an exemplary vehicle having a side impact structure for a fuel tank, according to an example.
FIGS. 2A and 2B are views of a fuel tank for a vehicle, according to the prior art.
FIGS. 3A and 3B are exemplary side and rear views of the side impact structure for the fuel tank of FIG. 1, according to an example.
FIG. 4 is an exemplary view of operation of a side impact structure for a fuel tank during a rollover of the vehicle of FIG. 1, according to an example.
FIG. 5 is a flow chart of operations 500 of an exemplary method to form a side impact structure on a fuel tank of a vehicle, according to an example.

### DETAILED DESCRIPTION

The detailed description set forth below provides information and examples of the disclosed technology with sufficient detail to enable those skilled in the art to practice the disclosure.

In some embodiments, one or more spheroidal elements is disposed on or around the fuel tank to absorb and redirect impact energy from a side or rollover impact. In some examples, a side impact structure for a fuel tank of a vehicle may include a base structure for supporting the fuel tank and a side facing structure having a distal side that extends past a side facing distal end of the fuel tank. The side impact structure may also include at least one spheroidal element rotatably coupled to the side facing_structure, such that impact energy by an object with the at least one spheroidal element in a first direction causes the at least one spheroidal element to rotate to convert the impact energy into rotational energy. In this manner, the impact energy is directed toward a second direction normal to the first direction.

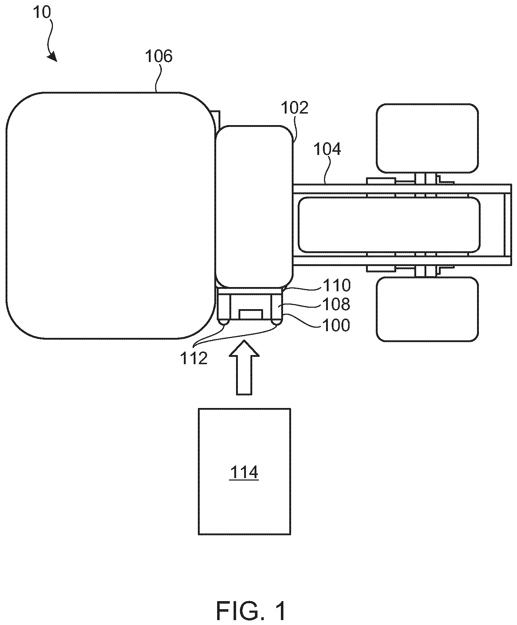

In this regard, FIG. 1 illustrates an exemplary vehicle 10 having a side impact structure 100 for a fuel tank 102, according to an example. The vehicle 10, which is a heavy truck in this example, may include a chassis 104, a cab 106, and one or more fuel tanks 102 mounted behind the cab 106 and/or in another location on the vehicle 10. In this example, a base structure 108 is attached to a side-facing portion 110 of the fuel tank, and at least one spheroidal element 112 is rotatably coupled to the base structure 108. The side impact structure 100 may be coupled to the fuel tank 102 in a number of ways, such as by bolting, welding, etc., as desired. In this example, the side impact structure 100 may be coupled to the fuel tank 102 such that additional equipment, such as an electrical equipment, a valve, and/or a vent element may be disposed between the base structure 108 and the fuel tank 102, as desired thereby providing additional impact protection to the additional equipment.

In this example, the side-impact structure 100 is arranged to face in a lateral direction with respect to a direction of travel of the vehicle 10. In this manner, an object 114 (e.g., another vehicle) impacting the vehicle 10 in a side impact, e.g., in a direction substantially normal to the direction of travel of the vehicle 10 impacts the at least one spheroidal element 112 before impacting the fuel tank 102 directly. The impact energy causes the at least one spheroidal element 112 to rotate to convert the impact energy into rotational energy to direct the impact energy toward a second direction normal to the first direction. The direction of the second direction may depend on many factors, such as the angle of impact, the center of gravity of the object 114 with respect to the at least one spheroidal element 114, etc. For example, the first direction may be a lateral direction with respect to a direction of travel of the vehicle 10, with the object 114 and/or impact energy being redirected toward a longitudinal and/or vertical direction with respect to the direction of travel of the vehicle 10. In this manner, the rotation of the at least one spheroidal element 112 redirects the object 114 and the resultant impact energy away from the fuel tank 102, thereby reducing or eliminating potential damage to the fuel tank 102 and its components.

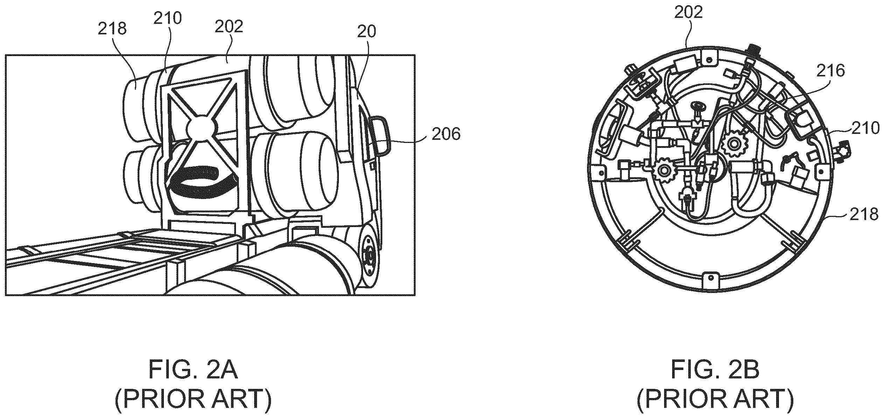

Before describing additional details of this and other embodiments, FIGS. 2A and 2B illustrate views of a fuel tank 202 for a vehicle 20 without any side impact structure, according to the prior art. As shown in FIG. 2A, the fuel tanks 202 may be mounted behind the cab 206 of the vehicle 20 with minimal or no side impact protection for the side facing portions 210 of the fuel tanks 202. As shown by FIG. 2B, many conventional fuel tanks 202 include additional equipment 216, such as electrical equipment, valves, vent assemblies, etc., on the side facing portion 210 of the fuel tank 202. Many manufacturers rely on the strength of the tank 202 itself and/or on a protective shroud 218 surrounding the additional equipment 216, which may be insufficient to adequately protect the fuel tank 202 and/or equipment 216 from damage, leakage, or other dangerous conditions in the event of a side or rollover impact.

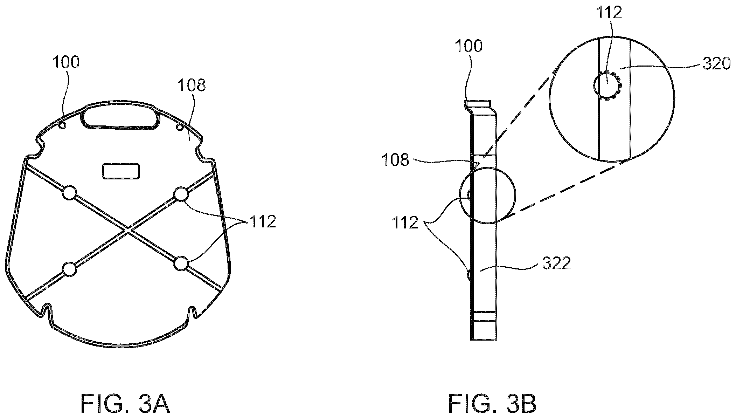

Referring now to FIGS. 3A and 3B illustrate exemplary side and rear views of the side impact structure 100 for the fuel tank 102 of FIG. 1, according to an example. In this example, a plurality of spheroidal elements 112 are arranged on the base structure 108. While four spheroidal elements 112 are illustrated, it should be understood that any number of spheroidal elements 112 may be used in different configurations, as desired. In this example, the base structure 108 includes a plurality of spheroidal recesses 320, with each recess accommodating and retaining a respective spheroidal element 112, such that each recess 320 permits rotation of the respective spheroidal element 112 in all rotational directions.

In this example, the side impact structure 100 further includes a wall structure 322 coupled to the base structure 108 for connection to the fuel tank 102. In this example, the wall structure 322 is designed such that impact energy from a side or rollover impact will cause structural failure of the wall structure 322 before structural failure of the base structure 108.

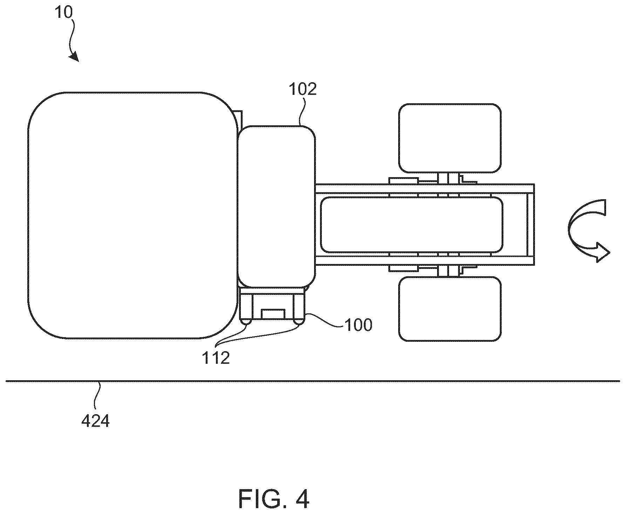

Referring now to FIG. 4, an exemplary view of operation of the side impact structure 100 for a fuel tank 102 during a rollover of the vehicle 10 of FIG. 1 is illustrated, according to an example. As shown by FIG. 4, in the event of a rollover of the vehicle 10, the at least one spheroidal element 112 is arranged to impact a ground surface 424 before the fuel tank 102 impacts the ground surface 424, thereby protecting the fuel tank 102 from damage.

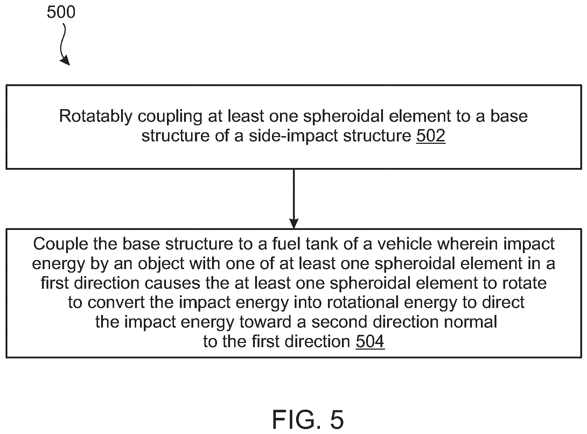

FIG. 5 is a flow chart of operations 500 of an exemplary method to form a side impact structure on a fuel tank of a vehicle, according to an example. The operations 500 may include rotatably coupling at least one spheroidal element to a base structure of a side-impact structure (Block 502). The operations 500 may further include coupling the base structure to a fuel tank of a vehicle wherein impact energy by an object with one of at least one spheroidal element in a first direction causes the at least one spheroidal element to rotate to convert the impact energy into rotational energy to direct the impact energy toward a second direction normal to the first direction (Block 504).

Additional examples include:
Example 1. A side impact structure for a fuel tank of a vehicle, the side impact structure comprising:
   a base structure attached to a side-facing portion of the fuel tank; and
   at least one spheroidal element rotatably coupled to the base structure, wherein impact energy by an object with the at least one spheroidal element in a first direction causes the at least one spheroidal element to rotate to convert the impact energy into rotational energy to direct the impact energy toward a second direction normal to the first direction.
Example 2. The side-impact structure of example 1, wherein the first direction is a lateral direction with respect to a direction of travel of the vehicle, and
   wherein the second direction is a longitudinal and/or vertical direction with respect to the direction of travel of the vehicle.
Example 3. The side-impact structure of any of examples 1 and 2, wherein the at least one spheroidal element is arranged to impact a ground surface before the fuel tank during a rollover of the vehicle.
Example 4. The side-impact structure of any preceding example, wherein at least one spheroidal element comprises a plurality of spheroidal elements.
Example 5. The side-impact structure of any preceding example, wherein the base structure comprises at least one recess to retain the at least one spheroidal element therein.
Example 6. The side-impact structure of example 5, wherein the at least one recess permits rotation of at least one spheroidal element in all rotational directions.
Example 7. The side-impact structure of any preceding example, further comprising a wall structure coupled to the base structure for connection to the fuel tank, wherein the impact energy causes structural failure of the wall structure before structural failure of the base structure.
Example 8. A fuel tank assembly for a vehicle comprising:
   a fuel tank; and
   the side-impact structure of any preceding example coupled to the fuel tank.
Example 9. The fuel tank assembly of example 8, wherein the side-impact structure is bolted to the fuel tank.
Example 10. The fuel tank assembly of example 8, wherein the side-impact structure is welded to the fuel tank.
Example 11. The fuel tank assembly of example 8, further comprising at least one of an electrical equipment, a valve, and a vent element disposed between the base structure and the fuel tank.
Example 12. A vehicle comprising the fuel tank assembly of example 8, wherein the side-impact structure is arranged to face in a lateral direction with respect to a direction of travel of the vehicle.
Example 13. A method comprising:
   rotatably coupling at least one spheroidal element to a base structure of a side-impact structure;
   coupling the base structure to a fuel tank of a vehicle wherein impact energy by an object with one of at least one spheroidal element in a first direction causes the at least one spheroidal element to rotate to convert the impact energy into rotational energy to direct the impact energy toward a second direction normal to the first direction.
Example 14. The method of example 13, wherein the first direction is a lateral direction with respect to a direction of travel of the vehicle, and
   wherein the second direction is a longitudinal and/or vertical direction with respect to the direction of travel of the vehicle.
Example 15. The method of any of examples 13 and 14, wherein the at least one spheroidal element is arranged to impact a ground surface before the fuel tank during a rollover of the vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A side impact structure for a fuel tank of a vehicle, the side impact structure comprising:
a base structure attached to a side-facing portion of the fuel tank; and
at least one spheroidal element rotatably coupled to the base structure, wherein impact energy by an object with the at least one spheroidal element in a first direction causes the at least one spheroidal element to rotate to convert the impact energy into rotational energy to direct the impact energy toward a second direction normal to the first direction.

2. The side-impact structure of claim 1, wherein the first direction is a lateral direction with respect to a direction of travel of the vehicle, and
wherein the second direction is a longitudinal and/or vertical direction with respect to the direction of travel of the vehicle.

3. The side-impact structure of any of claims 1 and 2, wherein the at least one spheroidal element is arranged to impact a ground surface before the fuel tank during a rollover of the vehicle.

4. The side-impact structure of any preceding claim, wherein at least one spheroidal element comprises a plurality of spheroidal elements.

5. The side-impact structure of any preceding claim, wherein the base structure comprises at least one recess to retain the at least one spheroidal element therein.

6. The side-impact structure of claim 5, wherein the at least one recess permits rotation of at least one spheroidal element in all rotational directions.

7. The side-impact structure of any preceding claim, further comprising a wall structure coupled to the base structure for connection to the fuel tank, wherein the impact energy causes structural failure of the wall structure before structural failure of the base structure.

8. A fuel tank assembly for a vehicle comprising:
a fuel tank; and
the side-impact structure of any preceding claim coupled to the fuel tank.

9. The fuel tank assembly of claim 8, wherein the side-impact structure is bolted to the fuel tank.

10. The fuel tank assembly of claim 8, wherein the side-impact structure is welded to the fuel tank.

11. The fuel tank assembly of claim 8, further comprising at least one of an electrical equipment, a valve, and a vent element disposed between the base structure and the fuel tank.

12. A vehicle comprising the fuel tank assembly of claim 8, wherein the side-impact structure is arranged to face in a lateral direction with respect to a direction of travel of the vehicle.

13. A method comprising:
rotatably coupling at least one spheroidal element to a base structure of a side-impact structure;
coupling the base structure to a fuel tank of a vehicle wherein impact energy by an object with one of at least one spheroidal element in a first direction causes the at least one spheroidal element to rotate to convert the impact energy into rotational energy to direct the impact energy toward a second direction normal to the first direction.

14. The method of claim 13, wherein the first direction is a lateral direction with respect to a direction of travel of the vehicle, and
wherein the second direction is a longitudinal and/or vertical direction with respect to the direction of travel of the vehicle.

15. The method of any of claims 13 and 14, wherein the at least one spheroidal element is arranged to impact a ground surface before the fuel tank during a rollover of the vehicle.
